# FASCICULE DE BREVET EUROPEEN

(11) **EP 4 015 298 B1**
(45) Date de publication et mention de la délivrance du brevet: **01.01.2025**
(21) Numéro de dépôt: 21213867.1
(22) Date de dépôt: 10.12.2021
(51) Int. Cl.: B60M 1/26

(54) **SYSTÈME DE COMPENSATION DE LA DILATATION THERMIQUE D'UN CÂBLE NOTAMMENT D'UN CÂBLE D'UNE CATÉNAIRE**
SYSTEM ZUR KOMPENSATION DER WÄRMEAUSDEHNUNG EINES KABELS, INSBESONDERE EINES KABELS EINER FAHRLEITUNG
SYSTEM FOR OFFSETTING THE THERMAL EXPANSION OF A CABLE, IN PARTICULAR A CATENARY CABLE

(30) Priorité: 17.12.2020 FR 2013498
(43) Date de publication de la demande: 22.06.2022
(73) Titulaire: SNCF Réseau, 93200 Saint-Denis (FR)
(72) Inventeur: POLLET, Pierre, 62580 FRESNOY EN GOHELLE (FR); LOYER, Andréa, 92120 MONTROUGE (FR); BERT, Jean-Louis, 45200 AMILLY (FR); LEMAIRE, Eric, 45700 PANNES (FR); VERNEX, Romuald, 91230 MONTGERON (FR); BAUDIN, Bernard, 75018 PARIS (FR)
(74) Mandataire: Bringer IP

(56) Documents cités:
- EP-A1- 3 604 026
- CH-A- 346 583
- FR-A- 412 930

## Description

### Domaine technique de l'invention

L'invention concerne un système de compensation de la dilatation thermique d'un câble et en particulier d'un câble d'une caténaire dans des infrastructures ferroviaires. L'invention s'étend également à un câble d'une caténaire ferroviaire comprenant un tel système de compensation.

### Arrière-plan technologique

Les caténaires sont principalement constituées de quatre composants dont les structures, les armements, les fils de contact, et les câbles porteurs. Les structures comprennent les supports, les poteaux et les portiques qui servent à porter l'ensemble de la caténaire. La caténaire attachée sur son armement comprend généralement un câble porteur, un câble auxiliaire, un câble conducteur appelé fil de contact permettant le contact avec le pantographe pour le guidage mécanique et l'acheminement du courant, un ensemble de câbles verticaux tendus entre le câble porteur, le câble auxiliaire et le fil de contact de manière à assurer la linéarité de ce dernier. L'armement de la caténaire comprend généralement, une console supportant la caténaire, un hauban de console servant plus particulièrement à régler la hauteur, un anti balançant lié au câble porteur auxiliaire et visant à empêcher toute inclinaison de la caténaire, cet anti balançant étant terminé par un bras de rappel lié au fil de contact.

Pour des raisons de mise en oeuvre et de maintien de la géométrie, la caténaire est divisée en « canton de pose » correspondant à une section sur laquelle les conducteurs sont ininterrompus. Afin de maîtriser la géométrie, en particulier la hauteur du plan de contact et la qualité du captage, on peut compenser les effets de la dilatation thermique des conducteurs par un système de régularisation.

Une solution connue pour pallier ce problème de dilatation thermique consiste à installer des dispositifs aux extrémités des cantons venant tirer sur les conducteurs, et permettent ainsi d'assurer, une constance de la tension mécanique et donc de la géométrie. Ces dispositifs peuvent être des treuils ou moufles auxquels est attaché un contrepoids, pour assurer une tension constante, tel que par exemple le dispositif Tensorex^{®} de Pfisterer.

L'un des inconvénients de cette solution réside dans l'installation de ces systèmes aux extrémités des cantons qui imposent une rotation autour du système. La longueur du câble à enrouler équivaut à la distance au point fixe multipliée par le coefficient de dilatation thermique du câble et multipliée par le delta de température.

En général, sur les caténaires 1500V classiques, les fils de contact sont régularisés, et les câbles porteurs non régularisés. De ce fait, la géométrie varie de manière significative en fonction de la température.

Une autre solution connue pour pallier ce problème consiste à reprendre manuellement la tension du câble porteur du dispositif. Il s'agit d'un dispositif qui se place dans une portée d'une caténaire et qui permet à l'aide d'une vis d'augmenter la tension mécanique en exerçant une flexion trois points sur le câble porteur.

L'inconvénient réside dans le fait que l'ajustement de la tension mécanique est manuel, ponctuel et qu'il n'est pas fonction de la température.

Un autre inconvénient des solutions précédentes réside aussi dans les contraintes nécessaires pour assurer cet ajustement de la tension. En d'autres termes, ces solutions impliquent un déplacement longitudinal du câble porteur sur toute la longueur du canton. Par exemple, pour un demi-canton de 750 mètres, il faut prévoir un déplacement dû à la dilatation du câble en fonction de la température d'environ 90 centimètres. Aussi, les chaînes de suspension du câble porteur ne permettent pas un tel déplacement. De ce fait, une régularisation des câbles notamment porteurs nécessiterait d'importantes modifications des installations existantes.

Le document CH 346 583 A divulgue un système de compensation de la dilatation thermique d'une caténaire avec un ressort dans le fil porteur. Les inventeurs ont cherché à proposer une solution alternative pour assurer le maintien d'une tension mécanique constante ou non dans un câble et qui puisse équiper un câble de type caténaire dans les infrastructures ferroviaires ou de type câble électrique utilisé dans les infrastructures énergétiques (lignes hautes tensions par exemple), sans difficultés, et sans nécessiter le remplacement de ces câbles.

### Objectifs de l'invention

L'invention vise ainsi à fournir un système de compensation de la dilatation thermique qui pallie au moins certains des inconvénients des dispositifs connus.

L'invention vise en particulier à fournir, dans au moins un mode de réalisation de l'invention, un système de compensation qui puisse être monté sur un câble conducteur ou non.

L'invention vise également à fournir, dans au moins un mode de réalisation de l'invention, un système de compensation qui puisse être monté sur un câble de caténaire sans nécessiter le remplacement de la structure de la caténaire existante.

L'invention vise également à fournir, dans au moins un mode de réalisation de l'invention, un système de compensation permettant une régularisation du câble équipé d'un tel dispositif.

L'invention vise également à fournir, dans au moins un mode de réalisation de l'invention, un système de compensation qui est peu encombrant et léger.

L'invention vise également, un câble porteur principal d'une caténaire équipé d'un tel système de compensation pour permettre en outre une régularisation du câble porteur.

### Exposé de l'invention

Pour ce faire, l'invention concerne un système de compensation de la dilatation thermique d'un câble principal comprenant une première portion de câble principal et une seconde portion de câble principal lesquelles deux portions s'étendant toutes deux selon une direction, dite direction longitudinale, et agencé entre deux points d'attache distincts, ladite première et seconde portion de câble principal étant chacune respectivement reliées à un point d'attache.

Le système de compensation selon l'invention comprend :
- au moins un câble de traction s'étendant de façon sensiblement parallèle à ladite direction longitudinale et comprenant une première extrémité et une seconde extrémité, ladite première extrémité étant attachée à ladite première portion de câble principal ;
- un dispositif de réglage destiné à réguler la tension dudit câble principal et comprenant :
   o un premier point de fixation auquel est reliée mécaniquement ladite seconde extrémité dudit câble de traction ;
   o un second point de fixation auquel est reliée mécaniquement ladite seconde portion de câble principal ; et
   o des moyens de rappel agencés entre lesdits premier et second points de fixation et étant configurés pour permettre d'exercer une tension mécanique entre le premier point de fixation et le second point de fixation afin de compenser la dilatation thermique dudit câble principal.

L'invention vise donc un système qui permet de compenser la dilatation thermique d'un câble principal. Dans tout le texte, on désigne par les termes « câble principal » un câble qui peut être porteur tel que par exemple un porteur principal ou un porteur auxiliaire d'une caténaire, ou bien non porteur ; un câble conducteur tel qu'un fil de contact par exemple d'une caténaire ou d'une infrastructure énergétique, ou bien non conducteur. Le système de compensation comprend au moins un câble de traction permettant de relier le dispositif de réglage au câble principal.

Le dispositif de réglage selon l'invention est lié mécaniquement au câble principal et ne nécessite pas de remplacement du câble préexistant. La liaison entre le dispositif de réglage et le câble principal peut être directe ou indirecte selon les variantes de l'invention.

Un système de compensation selon l'invention permet de régler la tension mécanique du câble principal lorsque ce dernier subit une dilatation thermique due aux variations de températures. Ainsi, le système de compensation peut être ajouté à un câble d'une infrastructure existante afin de permettre la régulation de la tension mécanique du câble principal selon la variation des températures. De par sa construction, le système de compensation peut réguler la tension mécanique du câble principal qui serait modifiée pour d'autres raisons autre que les variations de température.

Le système de compensation selon l'invention comprend également des moyens de rappel pour assurer la tension mécanique entre les deux points de fixation du dispositif de réglage. Les moyens de rappel permettent la reprise de tension du câble principal sans nécessiter l'intervention d'un opérateur lorsque le réglage est manuel et sans nécessiter le changement en intégralité du système de câble. Ce système de compensation permet donc un gain de temps tout en offrant une solution peu encombrante adaptable à tout type de câble et d'infrastructures.

De préférence, ce système de compensation est particulièrement bien adapté pour les câbles porteurs d'une caténaire qui ne sont pas conducteurs.

L'invention permet d'assurer une tension mécanique en cas d'éventuelle dilatation du câble principal et le système de compensation ne nécessite pas d'accroche fixe sur un support correspondant à un point d'attache formé par exemple dans le cas d'une caténaire par un poteau.

En outre le système de compensation de la dilatation thermique d'un câble selon l'invention permet un réglage de la tension mécanique du câble principal qui s'affranchit de l'intervention d'un opérateur. Le câble de traction permet de soutenir le câble principal par l'intermédiaire du dispositif de réglage lors de la dilatation thermique du câble principal.

L'invention permet en outre de compenser la dilatation thermique d'un câble sans nécessiter de lourdes modifications et adaptations des infrastructures existantes.

Avantageusement et selon l'invention, ladite première portion de câble principal et ladite seconde portion de câble principal sont jointes.

Ainsi et selon cette variante avantageuse de l'invention, ledit câble principal est intégral, autrement dit il est formé d'un seul tenant de manière à ce que ladite première portion et ladite seconde portion de câble forment un unique câble principal.

En outre, cette variante avantageuse permet de s'affranchir de la séparation du câble principal ce qui facilite la mise en oeuvre de ce système de compensation. En effet, le dispositif de réglage est agencé au voisinage du câble principal sans nécessiter d'adaptation particulière pour fixer le dispositif de réglage. Les termes « au voisinage du câble principal » signifient que les moyens de réglage sont directement fixés sur le câble principal ou sont à proximité du câble principal sans être au contact direct ou sont au contact du câble principal sans être fixés.

Avantageusement et selon l'invention, ladite première portion de câble principal et ladite seconde portion de câble principal sont disjointes.

Selon cette variante, le câble principal est divisé en deux portions formant le câble principal qui sont reliées entre elles par l'intermédiaire du système de compensation et plus particulièrement par le dispositif de réglage. En effet, le système de compensation permet de maintenir un équilibre entre les deux portions de câble principal afin de compenser la dilatation du câble principal.

Selon cette variante, le câble de traction et la première portion du câble principal sont reliés en continu pour former un unique câble reliant directement un point d'attache au premier point de fixation.

Avantageusement et selon l'invention, lesdits moyens de rappel sont directement reliés au câble principal pour former le second point de fixation.

Cette variante permet de relier directement le câble principal et en particulier la seconde extrémité du câble principal aux moyens de rappel afin de former le second point de fixation. Ainsi, la seconde extrémité du câble principal est en liaison directe avec les moyens de rappel.

La fixation du dispositif de réglage avec le câble principal peut par exemple être réalisée par un système de serrage, notamment un système de serrage comprenant deux plaques entourant le câble principal et fixées entre elles.

Avantageusement et selon l'invention, ledit système de compensation comprend deux câbles de traction, un premier câble de traction et un second câble de traction et lesdits moyens de rappel sont reliés :
- d'une part à ladite seconde extrémité dudit premier câble de traction pour former ledit premier point de fixation ; et
- d'autre part audit second câble de traction pour former le second point de fixation.

Selon cette variante, les deux câbles comprennent chacun une première extrémité et une seconde extrémité. En d'autres termes, le premier point de fixation est formé par les moyens de rappel et ladite seconde extrémité du premier câble de traction et le second point de fixation est formé par les moyens de rappel et la seconde extrémité du second câble de traction.

Le premier câble de traction et le second câble de traction sont fixés respectivement à la première extrémité de câble principal et à la seconde extrémité de câble principal. Aussi, la liaison entre le câble de traction et le câble principal peut se faire en parallèle ou bien en continu.

Selon une première variante, le câble principal est continu c'est-à-dire que la première portion et seconde portion de câble principal sont jointes et les deux câbles de traction sont reliés de manière à s'étendre sensiblement de façon parallèle au câble principal. Les moyens de rappel sont soit fixés au câble principal, soit séparés du câble principal.

Selon une deuxième variante, le câble principal est discontinu c'est-à-dire que la première portion et seconde portion de câble principal sont disjointes. Le premier câble de traction et le second câble de traction sont reliés respectivement de manière solidaire à la première portion et à la seconde portion du câble principal. Ainsi le câble de traction et le câble principal sont reliés dans la continuité et lorsque le câble principal se dilate à cause des températures qui varient, l'impact est directement répercuté sur le câble de traction qui effectue un effort de traction pour tendre le câble principal et par conséquent compenser les effets de la dilatation thermique.

Le système de compensation selon l'invention est caractérisé en ce que lesdits moyens de rappel comprennent au moins une came et un ressort de torsion :
- ladite au moins une came entourant ledit ressort de torsion de manière à permettre l'enroulement de ladite seconde extrémité dudit câble de traction ;
- ledit ressort de torsion comprenant une première tige d'ancrage et une seconde tige d'ancrage :
   o ladite première tige d'ancrage étant solidaire avec ladite came de manière à former le premier point de fixation ;
   o ladite seconde tige d'ancrage étant reliée mécaniquement à ladite seconde portion de câble principal de manière à former le second point de fixation, et
   o ledit ressort de torsion étant configuré pour permettre d'exercer une tension mécanique entre le premier point de fixation et le second point de fixation.

Selon l'invention, un ressort de torsion est contraint de manière à exercer une tension dans le câble principal et ladite came est fixe par rapport à la première tige d'ancrage, de sorte à tourner lorsque le ressort de torsion est contraint pour tendre le câble principal.

Les tiges d'ancrage permettent de fixer le ressort de torsion. Elles peuvent également être contraintes pour permettre la tension du ressort et l'enroulement du câble de traction autour de la came lorsque le ressort est suffisamment sous tension. De ce fait, le câble principal se tend pour compenser la dilatation thermique.

En outre, les moyens de rappel comprennent un dispositif de blocage formé d'un support sur lequel est monté le ressort de torsion et d'une vis qui permet d'éviter que le ressort et la came se désolidarisent du dispositif de réglage.

De préférence, la came est une came à profil intérieur permettant d'entrainer le déplacement du câble de traction s'enroulant autour de celle-ci et d'engendrer un effort de traction.

Selon cette variante, la régularisation du câble principal se fait en simple répartie c'est-à-dire qu'un seul câble de traction effectue l'effort de traction en s'enroulant autour de la came.

En outre et selon d'autres variantes de l'invention, les moyens de rappel peuvent comprendre un ressort de torsion, un ressort linéaire, un vérin, un piston ou tout autre moyen permettant d'exercer une tension mécanique entre le premier point de fixation et le second point de fixation.

Avantageusement et selon l'invention, ledit système de compensation comprend deux câbles de traction et lesdits moyens de rappel comprennent :
- une première came et une seconde came entourant ledit ressort de torsion de manière à permettre l'enroulement respectif dudit premier câble de traction et dudit second câble de traction autour de chaque came ; ;
- ledit ressort de torsion comprend une première tige d'ancrage et une seconde tige d'ancrage,
   o ladite première tige d'ancrage étant solidaire avec ladite première came de manière à former le premier point de fixation ;
   o ladite seconde tige d'ancrage étant solidaire avec ladite seconde came de manière à former le second point de fixation ; et
   o ledit ressort de torsion étant configuré pour permettre d'exercer une tension mécanique entre le premier point de fixation et le second point de fixation pour permettre l'enroulement respectif de chaque câble de traction autour de chaque came.

Selon cette variante, deux cames entourent ledit ressort de torsion et chaque tige d'ancrage du ressort est fixée à une came. Autrement dit, chaque tige d'ancrage est enfoncée de manière à pénétrer dans chaque came. En outre, le premier câble de traction peut s'enrouler autour de la première came pour réaliser un effort de traction et le second câble de traction peut s'enrouler autour de la seconde came. Ainsi, lorsque le câble principal se dilate et par conséquent se détend, chaque câble de traction va exercer une force de traction en s'enroulant autour de la came respective et permettre de ce fait la tension mécanique du câble principal.

En outre, la régularisation du câble principal se fait en répartie double, autrement dit, avec deux câbles de traction qui réalisent chacun un effort de traction pour permettre la tension mécanique de chaque portion du câble principal.

Avantageusement et selon l'invention, le dispositif de réglage est configuré pour passer d'une première position, dite position de référence, dans laquelle le ressort de torsion exerce un effort minimal à une deuxième position, dite position d'effort, dans laquelle ledit ressort est contraint pour augmenter la tension dans le câble principal, et inversement.

Selon cette variante, la première position dite de référence correspond à la position dans laquelle le câble principal s'étend horizontalement entre les deux points d'attache et n'est pas dilaté. Dans cette position, les températures de l'environnement dans lequel est agencé le câble principal permettent de maintenir une certaine tension et le ressort de torsion exerce un effort minimal. Le ressort de torsion exerce un effort minimal c'est-à-dire qu'il n'est pas ou peu contraint. Le ressort exerce un effort minimal de manière à conserver la tension nécessaire dans le câble principal pour qu'il soit tendu.

La deuxième position dite d'effort correspond à la position dans laquelle le câble principal est dilaté c'est-à-dire qu'il n'est pas entièrement tendu horizontalement entre les deux points d'attache. Le câble peut former une parabole qui peut être plus ou moins accentuée selon la dilatation du câble due à la chaleur. En effet, plus les températures de l'environnement dans lequel est agencé le câble principal sont élevées plus la dilatation du câble principal est accentuée. Ainsi, la longueur du câble peut être augmentée de quelques centimètres à plusieurs dizaines de centimètres selon les variations de températures. Dans cette position d'effort, les températures de l'environnement dans lequel est agencé le câble sont supérieures aux températures de l'environnement dans une position de référence.

Le système de compensation permet ainsi de passer spontanément d'une première position, dite position de référence, à une seconde position, dite position d'effort et inversement sans nécessiter l'intervention d'un opérateur.

Pour passer d'une position de référence à une position d'effort, le dispositif de réglage présente des positions intermédiaires correspondantes aux positions intermédiaires du câble principal et notamment lorsque la tension mécanique du câble principal varie entre la position de référence et la position d'effort selon les variations de températures.

L'invention concerne aussi un câble de caténaire équipé d'un système de compensation de la dilatation thermique dudit câble de caténaire agencé entre deux points d'attache distincts formés par des poteaux.

L'invention concerne de manière avantageuse un câble porteur de caténaire équipé d'un système de compensation de la dilatation thermique dudit câble porteur agencé entre deux points d'attache distincts.

Les avantages et effets techniques du système de compensation selon l'invention s'appliquent *mutatis mutandis* à un câble de caténaire équipé d'un système de compensation selon l'invention et à un câble porteur de caténaire équipé d'un système de compensation selon l'invention.

L'invention concerne également un système de compensation et un câble de caténaire équipé d'un système de compensation selon l'invention, caractérisés en combinaison par tout ou partie des caractéristiques mentionnées ci-dessus ou ci-après.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique d'un dispositif de réglage du système de compensation selon un mode de réalisation de régularisation par répartie simple,
[Fig. 2] est une vue schématique d'un dispositif de réglage du système de compensation selon un mode de réalisation de régularisation par répartie double,
[Fig. 3] est une vue schématique de côté d'un système de compensation en position sur un câble principal selon un premier mode de réalisation de l'invention en répartie simple,
[Fig. 4] est une vue schématique de côté d'un système de compensation en position sur un câble principal selon un deuxième mode de réalisation de l'invention en répartie double,
[Fig. 5] est une vue schématique de côté d'un système de compensation en position sur un câble principal selon un troisième mode de réalisation de l'invention en répartie simple,
[Fig. 6] est une vue schématique de côté d'un système de compensation en position sur un câble principal selon un quatrième mode de réalisation de l'invention en répartie double.

### Description détaillée de modes de réalisation de l'invention

Sur les figures, les échelles et les proportions ne sont pas strictement respectées et ce, à des fins d'illustration et de clarté. Dans toute la description détaillée qui suit en référence aux figures, sauf indication contraire, chaque élément du système de compensation est décrit tel qu'il est agencé lorsqu'il est fixé au voisinage d'un câble principal porteur d'une caténaire relié entre deux poteaux formant les points d'attache, les points d'attache délimitent ainsi une portée. En outre, les éléments identiques, similaires ou analogues sont désignés par les mêmes références sur toutes les figures.

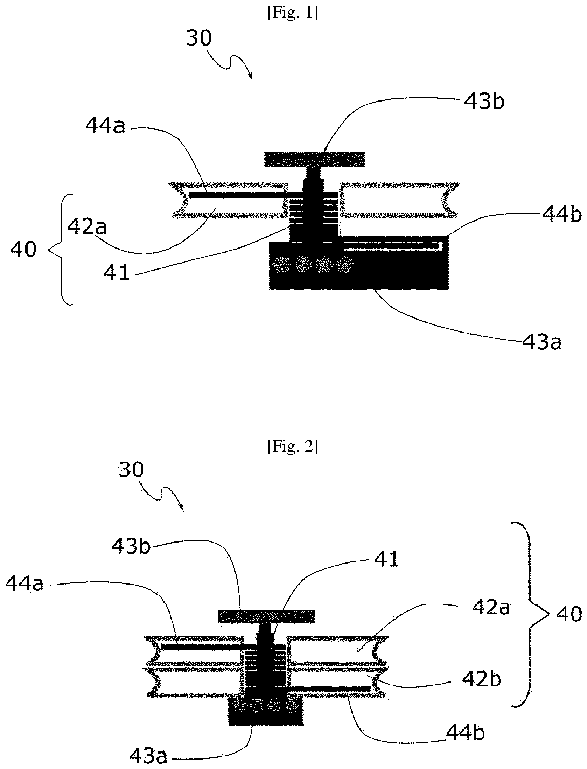

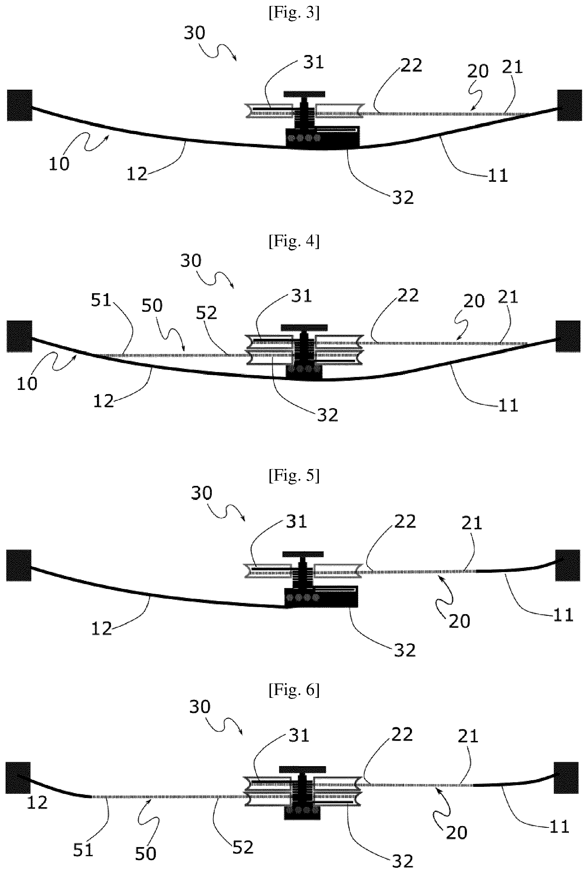

Les figures 1 et 2 représentent le dispositif de réglage du système de compensation selon deux modes de réalisation en répartie simple ou double. Le dispositif de réglage selon les figures 1 ou 2 est adapté sur des systèmes de compensation de la dilatation d'un câble principal porteur illustrés par les figures 3 à 6. Les figures 3 et 4 représentent le câble 10 porteur principal dont la première portion 11 et la seconde portion 12 sont jointes. Les figures 5 et 6 représentent le câble 10 porteur principal dont la première portion 11 et la seconde portion 12 sont disjointes.

Selon un premier mode de réalisation tel qu'illustré par la figure 3, un seul câble 20 de traction est représenté et la seconde extrémité 21 du câble de traction forme le premier point 31 de fixation du dispositif 30 de réglage. La première extrémité 21 du câble 20 de traction est reliée à la première portion 11 du câble 10 principal. Le câble de traction est par exemple attaché au câble principal par un système de serre-câble d'ancrage fixé au câble principal, auquel est attaché une extrémité d'encrage du câble de traction

Selon ce mode de réalisation, le dispositif de réglage, tel qu'illustré par la figure 1, comprend des moyens 40 de rappel formés par un ressort 41 de torsion et une came 42a. Un dispositif de blocage comprenant un support 43a et une vis 43b fixé au support permet de maintenir la came 42a solidaire du dispositif qui est fixée mécaniquement au ressort 41 de torsion. Le ressort 41 de torsion comprend une première tige 44a solidaire de la came 42a formant ainsi le premier point 31 de fixation et une tige 44b solidaire du support 43a formant le second point 32 de fixation. Lorsque le câble 10 principal se dilate sous l'effet de la température, la longueur de câble augmente ce qui provoque de ce fait un effort de traction du câble 20 de traction qui s'enroule autour de la came 42a pour augmenter la tension du câble 10 principal.

Selon un deuxième mode de réalisation représenté sur la figure 4, le système de compensation comprend deux câbles 20 ; 50 de traction dont chaque première extrémité 21 ; 51 est respectivement reliée à chaque portion 11 ; 12 du câble principal, les portions 11 et 12 étant jointes selon ce mode de réalisation. Les secondes extrémités 22 ; 52 des câbles 20 ; 50 de traction sont reliées au dispositif de réglage pour former respectivement le premier point 31 et le second point 32 de fixation.

Selon ce mode de réalisation, le dispositif de réglage, tel qu'illustré par la figure 2, comprend des moyens 40 de rappel. Les moyens 40 de rappel comprennent un ressort 41 de torsion, une première came 42a et une seconde came 42b. Le ressort 41 de torsion comprend une première tige 44a ancrée dans la première came 42a et une seconde tige 44b ancrée dans la seconde came 42b. Le dispositif 30 de réglage peut ainsi passer d'une position de référence dans laquelle le câble 10 principal est tendu et le ressort 41 de torsion présente un effort suffisant pour maintenir le câble principal tendu à une position d'effort dans laquelle le câble 10 principal est dilaté et le ressort 41 contraint pour compenser la dilatation thermique du câble principal. Dans la position d'effort, la longueur du câble augmente sous l'effet de la chaleur à cause des variations de température de l'environnement dans lequel est agencé le câble principal. Dans cette position d'effort, le système compense la tension par l'intermédiaire du ressort 41 de torsion qui exerce une tension mécanique entre la première tige 44a et la seconde tige 44b formant respectivement le premier point 31 de fixation et le second point 32 de fixation.

Selon un troisième mode de réalisation représenté sur la figure 5, le câble 10 principal est discontinu et disjoint de manière à ce que la première extrémité 11 du câble principal soit reliée à la première portion 21 de câble de traction afin de former un câble d'un seul tenant en continu. Aussi, le câble 20 de traction peut s'enrouler autour de la came 42a tel que décrit selon le mode de réalisation illustré par la figure 1 représentant le dispositif de réglage avec une régularisation en simple répartie, c'est-à-dire qu'un seul câble de traction effectue l'effort de traction en s'enroulant autour d'une came.

Selon un quatrième mode de réalisation représenté sur la figure 6, le câble 10 principal est disjoint. En d'autres termes, la première portion 11 du câble principal est reliée à la première extrémité 21 du premier câble 20 de traction et la seconde portion 12 du câble principal est reliée à la première extrémité 51 du second câble 50 de traction. Les secondes extrémités 22 et 52 respectives du câble 20 et 50 de traction sont reliées au dispositif 30 de réglage pour former respectivement le premier et le second point 31 et 32 de fixation. Les moyens de réglage selon ce mode de réalisation sont tels qu'illustrés par la figure 2. Aussi, les secondes extrémités 22 et 52 des câbles 20 ; 50 de traction sont respectivement reliées à la première came 42a et à la seconde came 42b.

Ce mode de réalisation permet ainsi d'avoir une régularisation en répartie double, autrement dit, avec deux câbles de traction qui réalisent chacun un effort de traction pour permettre la tension mécanique de chaque portion 11 et 12 du câble principal.

La came est par exemple réalisée dans une matière métallique tel que de l'acier, de l'aluminium ou de la fonte, et présente une forme de spirale ou une forme conique avec hélice. Le ressort de torsion a une raideur angulaire par exemple comprise entre 2000 Nm/rad et 5000 Nm/rad, par exemple environ 3600 Nm/rad.

D'autres modes de réalisation peuvent être envisagés, notamment en remplaçant le dispositif de réglage qui peut être tout moyen permettant à un câble de traction d'exercer un effort de traction afin de réguler la tension mécanique du câble principal. Par exemple, les moyens de rappel peuvent comprendre un ressort de compression, un ressort de traction, un vérin pouvant être piloté, ou tout autre moyen permettant de faire varier la tension mécanique dans un câble principal. En outre, même si les différents modes de réalisation représentent un dispositif de réglage situé approximativement au milieu du câble principal, le dispositif de réglage peut être agencé à d'autres positions sur le câble principal du moment que le système peut agir sur les deux portions du câble principal et réaliser l'effort de traction nécessaire pour réguler la tension mécanique du câble principal.

## Revendications

1. Système de compensation de la dilatation thermique d'un câble (10) principal comprenant une première portion (11) de câble principal et une seconde portion (12) de câble principal lesquelles deux portions s'étendant toutes deux selon une direction, dite direction longitudinale, et agencé entre deux points d'attache distincts, ladite première et seconde portion de câble principal étant chacune respectivement reliées à un point d'attache, ledit système de compensation comprend :
- au moins un câble (20) de traction s'étendant de façon sensiblement parallèle à ladite direction longitudinale et comprenant une première extrémité (21) et une seconde extrémité (22), ladite première extrémité étant attachée à ladite première portion (11) de câble principal ;
- un dispositif (30) de réglage destiné à réguler la tension dudit câble principal et comprenant :
o un premier point (31) de fixation auquel est reliée mécaniquement ladite seconde extrémité (22) dudit câble de traction ;
o un second point (32) de fixation auquel est reliée mécaniquement ladite seconde portion (12) de câble principal ; et
o des moyens (40) de rappel agencés entre lesdits premier et second points de fixation (31 ; 32) et étant configurés pour permettre d'exercer une tension mécanique entre le premier point (31) de fixation et le second point (32) de fixation afin de compenser la dilatation thermique dudit câble (10) principal, ledit système de compensation étant **caractérisé**
**en ce que** lesdits moyens (40) de rappel comprennent au moins une came (42) et un ressort (41) de torsion :
- ladite au moins une came (42) entourant ledit ressort (41) de torsion de manière à permettre l'enroulement de ladite seconde extrémité (22) dudit câble de traction ;
- ledit ressort de torsion comprenant une première tige (44a) d'ancrage et une seconde tige (44b) d'ancrage :
o ladite première tige (44a) d'ancrage étant solidaire avec ladite came (42a) de manière à former le premier point (31) de fixation ;
o ladite seconde tige (44b) d'ancrage étant reliée mécaniquement à ladite seconde portion (12) de câble principal de manière à former le second point (32) de fixation, et
o ledit ressort de torsion étant configuré pour permettre d'exercer une tension mécanique entre le premier point (31) de fixation et le second point (32) de fixation.

2. Système de compensation selon la revendication 1 **caractérisé en ce que** ladite première portion (11) de câble principal et ladite seconde portion (12) de câble principal sont jointes.

3. Système de compensation selon la revendication 1, **caractérisé en ce que** ladite première portion (11) de câble principal et ladite seconde portion (12) de câble principal sont disjointes.

4. Système de compensation selon l'une des revendications 1 à 3 **caractérisé en ce que** lesdits moyens (40) de rappel sont directement reliés au câble (10) principal pour former le second point (32) de fixation.

5. Système de compensation selon l'une des revendications 1 à 3, **caractérisé en ce qu'**il comprend deux câbles de traction, un premier câble (20) de traction et un second câble (50) de traction et **en ce que** lesdits moyens (40) de rappel sont reliés :
- d'une part à ladite seconde extrémité (22) dudit premier câble (20) de traction pour former ledit premier point (31) de fixation ; et
- d'autre part audit second câble (50) de traction pour former le second point (32) de fixation.

6. Système de compensation selon la revendication 5, **caractérisé en ce qu'**il comprend deux câbles (20 ; 50) de traction et **en ce que** :
- lesdits moyens (40) de rappel comprennent une première came (42a) et une seconde came (42b) entourant ledit ressort (41) de torsion de manière à permettre l'enroulement respectif dudit premier câble (20) de traction et dudit second câble (50) de traction autour de chaque came (42a ; 42b) ;
- ledit ressort (41) de torsion comprend une première tige (44a) d'ancrage et une seconde tige (44b) d'ancrage,
o ladite première tige (44a) d'ancrage étant solidaire avec ladite première came (42a) de manière à former le premier point (31) de fixation ;
o ladite seconde tige (44b) d'ancrage étant solidaire avec ladite seconde came (42b) de manière à former le second point (32) de fixation ; et
o ledit ressort de torsion étant configuré pour permettre d'exercer une tension mécanique entre le premier point (31) de fixation et le second point (32) de fixation pour permettre l'enroulement respectif de chaque câble (20 ; 50) de traction autour de chaque came (42a ; 42b).

7. Système de compensation selon l'une des revendications 1 à 6, **caractérisé en ce que** le dispositif (30) de réglage est configuré pour passer d'une première position, dite position de référence, dans laquelle le ressort (41) de torsion exerce un effort minimal à une deuxième position, dite position d'effort, dans laquelle ledit ressort est contraint pour augmenter la tension dans le câble (10) principal, et inversement.

8. Câble de caténaire équipé d'un système de compensation de la dilatation thermique selon l'une des revendications 1 à 7, configuré pour compenser la dilatation thermique dudit câble de caténaire agencé entre deux points d'attache distincts formés par des poteaux.

## Patentansprüche

1. Ausgleichssystem für die thermische Expansion eines Hauptkabels (10), das einen ersten Hauptkabelabschnitt (11) und einen zweiten Hauptkabelabschnitt (12) umfasst, worin sich beide Abschnitte entlang einer Richtung, der Längsrichtung, erstrecken und die zwischen zwei separaten Anbringungspunkten angeordnet sind, worin der erste und zweite Hauptkabelabschnitt entsprechend mit einem Anbringungspunkt verbunden ist, worin das Ausgleichssystem umfasst:
- mindestens ein Spannkabel (20), das sich im Wesentlichen parallel zu der Längsrichtung erstreckt und ein erstes Ende (21) und ein zweites Ende (22) umfasst, worin das erste Ende an dem ersten Hauptkabelabschnitt (11) befestigt ist;
- eine Einstellvorrichtung (30) zum Regulieren der Spannung des Hauptkabels, welche umfasst:
o einen ersten Befestigungspunkt (31), mit dem das zweite Ende (22) des Spannkabels mechanisch verbunden ist;
o einen zweiten Befestigungspunkt (32), mit dem der zweite Hauptkabelabschnitt (12) mechanisch verbunden ist; und
o Spannmittel (40), die zwischen dem ersten und zweiten Befestigungspunkt (31; 32) angeordnet und ausgestaltet sind, auszuübende mechanische Spannung zwischen dem ersten Befestigungspunkt (31) und dem zweiten Befestigungspunkt (32) zu ermöglichen, um thermische Expansion des Hauptkabels (10) auszugleichen,
worin das Ausgleichssystem **dadurch gekennzeichnet ist, dass** das Spannmittel (40) mindestens einen Nocken (42) und eine Spannfeder (41) umfasst:
- worin der mindestens eine Nocken (42) die Spannfeder (41) umgibt, um ein Aufwickeln des zweiten Endes (22) des Spannkabels zu ermöglichen,
- worin die Spannfeder einen ersten Verankerungsstab (44a) und einen zweiten Verankerungsstab (44b) umfasst:
o der erste Verankerungsstab (44a) einstückig mit dem Nocken (42a) vorliegt, um den ersten Befestigungspunkt (31) auszubilden;
o der zweite Verankerungsstab (44b) mit dem zweiten Hauptkabelabschnitt (12) mechanisch verbunden ist, um den zweiten Befestigungspunkt (32) auszubilden, und
o die Spannfeder ausgestaltet ist, ein Ausüben mechanischer Spannung zwischen dem ersten Befestigungspunkt (31) und dem zweiten Befestigungspunkt (32) zu ermöglichen.

2. Ausgleichssystem nach Anspruch 1, **dadurch gekennzeichnet, dass** der erste Hauptkabelabschnitt (11) und der zweite Hauptkabelabschnitt (12) verbunden sind.

3. Ausgleichssystem nach Anspruch 1, **dadurch gekennzeichnet, dass** der erste Hauptkabelabschnitt (11) und der zweite Hauptkabelabschnitt (12) getrennt sind.

4. Ausgleichssystem nach einem der Ansprüche 1 bis 3, **dadurch gekennzeichnet, dass** die Spannmittel (40) direkt mit dem Hauptkabel (10) verbunden sind, um den zweiten Befestigungspunkt (32) auszubilden.

5. Ausgleichssystem nach einem der Ansprüche 1 bis 3, **dadurch gekennzeichnet, dass** dieses zwei Spannkabel, ein erstes Spannkabel (20) und ein zweites Spannkabel (50) umfasst, und darin, dass die Spannmittel (40) verbunden sind:
- mit einem Teil an dem zweiten Ende (22) des ersten Spannkabels (20), um den ersten Befestigungspunkt (31) auszubilden; und
- mit dem anderen Teil an dem zweiten Spannkabel (50), um den zweiten Befestigungspunkt (32) auszubilden.

6. Ausgleichssystem nach Anspruch 5, **dadurch gekennzeichnet, dass** dieses zwei Spannkabel (20; 50) umfasst und darin, dass:
- die Spannmittel (40) einen ersten Nocken (42a) und einen zweiten Nocken (42b) umfassen, die die Spannfeder (41) umgeben, so dass das erste Spannkabel (20) und das zweite Spannkabel (50) um den entsprechenden Nocken (42a; 42b) entsprechend aufgewickelt werden kann;
- die Spannfeder (41) einen ersten Verankerungsstab (44a) und einen zweiten Verankerungsstab (44b) umfasst,
o der erste Verankerungsstab (44a) einstückig mit dem ersten Nocken (42a) vorliegt, um den ersten Befestigungspunkt (31) auszubilden;
o der zweite Verankerungsstab (44b) einstückig mit dem zweiten Nocken (42b) vorliegt, um den zweiten Befestigungspunkt (32) auszubilden; and
o die Spannfeder ausgestaltet ist, auszuübende mechanische Spannung zwischen dem ersten Befestigungspunkt (31) und dem zweiten Befestigungspunkt (32) zu ermöglichen, dass jedes Spannkabel (20; 50) um den entsprechenden Nocken (42a; 42b) entsprechend aufgewickelt werden kann.

7. Ausgleichssystem nach einem der Ansprüche 1 bis 6, **dadurch gekennzeichnet, dass** die Einstellvorrichtung (30) ausgestaltet ist, von einer ersten Position, der Referenzposition, in der die Spannfeder (41) eine minimale Kraft ausübt, in eine zweite Position, der Kraftposition, zu bewegen, in der die Feder gespannt ist, um die Spannung in dem Hauptkabel (10) zu erhöhen, und umgekehrt.

8. Oberleitungskabel, welches mit einem Ausgleichssystem für thermische Expansion nach einem der Ansprüche 1 bis 7 versehen und ausgestaltet ist, thermische Expansion des Oberleitungskabels auszugleichen, das zwischen zwei separaten Anbringungspunkten angebracht ist, die durch Masten ausgebildet sind.

## Claims

1. Compensation system for the thermal expansion of a main cable (10) comprising a first main cable portion (11) and a second main cable portion (12), two portions both extending along one direction, said longitudinal direction, and arranged between two distinct attachment points , said first and second main cable portions each being respectively connected to an attachment point, said compensation system comprising:
- at least one traction cable (20) extending substantially parallel to said longitudinal direction and comprising a first end (21) and a second end (22), said first end being attached to said first main cable portion (11);
- an adjusting device (30) for regulating the tension of said main cable, comprising :
o a first fixing point (31) to which said second end (22) of said traction cable is mechanically connected;
o a second fixing point (32) to which said second main cable portion (12) is mechanically connected; and
o return means (40) arranged between said first and second fixing points (31; 32) and being configured to enable mechanical tension to be exerted between the first fixing point (31) and the second fixing point (32) in order to compensate for thermal expansion of said main cable (10),
said compensation system being **characterized in that** said return means (40) comprise at least one cam (42) and a torsion spring (41):
- said at least one cam (42) surrounding said torsion spring (41) so as to allow winding of said second end (22) of said traction cable;
- said torsion spring comprising a first anchoring rod (44a) and a second anchoring rod (44b):
o said first anchoring rod (44a) being integral with said cam (42a) so as to form the first fixing point (31);
o said second anchoring rod (44b) being mechanically connected to said second main cable portion (12) so as to form the second fixing point (32), and
o said torsion spring being configured to allow mechanical tension to be exerted between the first fixing point (31) and the second fixing point (32).

2. Compensation system according to claim 1, **characterized in that** said first main cable portion (11) and said second main cable portion (12) are joined.

3. Compensation system according to claim 1, **characterized in that** said first main cable portion (11) and said second main cable portion (12) are disjoint.

4. Compensation system according to one of claims 1 to 3, **characterized in that** said return means (40) are directly connected to the main cable (10) to form the second attachment point (32).

5. Compensation system according to one of claims 1 to 3, **characterized in that** it comprises two traction cables, a first traction cable (20) and a second traction cable (50), and **in that** said return means (40) are connected :
- to said second end (22) of said first pull cable (20) to form said first attachment point (31); and
- on the other hand to said second traction cable (50) to form the second fixing point (32).

6. Compensation system according to claim 5, **characterized in that** it comprises two traction cables (20; 50) and **in that** :
- said return means (40) comprise a first cam (42a) and a second cam (42b) surrounding said torsion spring (41) so as to allow the respective winding of said first traction cable (20) and said second traction cable (50) around each cam (42a; 42b);
- said torsion spring (41) comprises a first anchoring rod (44a) and a second anchoring rod (44b),
o said first anchoring pin (44a) being integral with said first cam (42a) so as to form the first fixing point (31);
o said second anchoring pin (44b) being integral with said second cam (42b) so as to form the second fixing point (32) ; and
o said torsion spring being configured to enable mechanical tension to be exerted between the first fixing point (31) and the second fixing point (32) to enable each traction cable (20; 50) to be wound around each cam (42a; 42b), respectively.

7. Compensation system according to one of claims 1 to 6, **characterized in that** the adjustment device (30) is configured to move from a first position, known as the reference position, in which the torsion spring (41) exerts minimal force, to a second position, known as the force position, in which said spring is stressed to increase the tension in the main cable (10), and vice versa.

8. Catenary cable equipped with a compensation system for thermal expansion according to one of claims 1 to 7, configured to compensate for thermal expansion of said catenary cable arranged between two distinct attachment points formed by poles.
